# EUROPÄISCHE PATENTSCHRIFT

(11) **EP 1 336 328 B1**
(45) Veröffentlichungstag und Bekanntmachung des Hinweises auf die Patenterteilung: **03.11.2004**
(21) Anmeldenummer: 01995642.4
(22) Anmeldetag: 20.11.2001
(51) Int. Cl.: H05H 1/42, B23K 9/22, B05B 7/16

(54) **PLASMA-PULVER-SCHWEISSBRENNER**
PLASMA POWDER WELDING TORCH
CHALUMEAU DE SOUDAGE AU PLASMA ET A LA POUDRE

(30) Priorität: 21.11.2000 DE 10057676
(43) Veröffentlichungstag der Anmeldung: 20.08.2003
(73) Patentinhaber: Alexander Binzel Schweisstechnik GmbH & Co. KG, 35418 Buseck (DE)
(72) Erfinder: KRÄMER, Eckhart, 35418 Buseck (DE); GIESSLER, Stefan, 35435 Wettenberg (DE)
(74) Vertreter: Müller, Eckhard, Dr.
(86) Internationale Anmeldenummer: PCT/EP2001/013392
(87) Internationale Veröffentlichungsnummer: WO 2002/043454

(56) Entgegenhaltungen:
- US-A- 3 197 605
- US-A- 4 080 550
- US-A- 4 672 171
- US-A- 4 866 240
- US-A- 5 556 560

## Beschreibung

Die Erfindung betrifft einen Plasma-Pulver-Schweißbrenner mit den Merkmalen des Oberbegriffs des Anspruchs 1. Ein solcher Schweißbrenner ist aus US 5 556 560 bekannt.

Plasmaschweißbrenner werden in vielen technischen Anwendungen zum Verbindungs- oder Auftragschweißen eingesetzt. Ist für die jeweilige Anwendung die Zugabe von Zusatzmaterial erforderlich, wird dieses in Form von Draht, Stäbchen oder als Pulver zugegeben.

Die Zugabe des pulverförmigen Zusatzmaterials erfolgt in der Praxis über verschiedene Vorrichtungen, die individuell an die konstruktiven Vorgaben des jeweils verwendeten Brenners gebunden sind. Grundsätzlich wird das Pulver aus einem Vorratsbehälter mittels eines Trägergases zum Schweißbrenner hin transportiert. Aus Öffnungen, die verschieden gestaltet sein können, tritt das Pulver mit dem Trägergasstrom aus und gelangt so in das Schmelzschweißbad. Dort wird es aufgrund der thermischen Einwirkung des Plasmatransferlichtbogens verflüssigt und vermischt sich mit der Metallschmelze des Grundwerkstoffes. Dadurch kommt es zu der gewünschten Volumenvergrößerung des Metallschmelzbades. Durch die Erstarrung der Schmelze entsteht die Verbindungs- oder Auftragsraupe.

Eine sehr einfache Methode ist die Pulverzugabe durch ein eigenes, vom Brenner getrenntes Röhrchen, das seitlich unter der Brennerspitze angebracht ist. Aus dem Röhrchen wird das Pulver im flachen Winkel vor den Brenner in das Schweißbad geblasen. Eine entsprechende Vorrichtung ist aus der DE PS 1 193 324 vorbekannt. Die dortige Vorrichtung ist allerdings kein Schweißbrenner, sondern für ein etwas anderes Arbeitsverfahren, nämlich das Pulverflämmen, ausgebildet. Nachteilig bei der Verwendung solcher getrennter Pulverzuführungen beim Schweißen ist, daß für jeden Anwendungsfall zunächst eine Optimierung der Konstellation Röhrchen/Brenner vorgenommen werden muß. Durch die Einblasung aus einer einzigen Richtung sind häufig die Brennerposition und die Schweißrichtung festgelegt. Ein weiterer Nachteil ist die mit der Röhrchenmontage bedingte Störgeometrie, die zu Zugänglichkeitsproblemen bei komplexen zu schweißenden Geometrien führt.

Aus der DE 40 30 541 C2 ist ein Plasmabrenner zur Beschichtung von Grundwerkstoffen mit pulverförmigen Zusatzwerkstoffen bekannt mit einer Fördergasdüse, welche einen Fördergasdüsenkanal für die Zuführung des die Pulverpartikel transportierenden Fördergasstromes aufweist. Der Fördergasdüsenkanal weist einen Abschnitt mit sich in Strömungsrichtung verjüngendem Querschnitt auf, wodurch eine Vergrößerung der Fördergas- bzw. Pulvergeschwindigkeit im Mündungsbereich des Fördergasdüsenkanals bewirkt und damit die Gefahr einer Tropfenbildung des Pulvers im Düsenkanal auch bei einem relativ großen Einkupplungswinkel des Fördergasstromes vermieden werden soll.

Aus der DE 39 30 267 A1 ist ein Schweißbrenner bekannt, bei dem das Pulver durch eine Bohrung an der unteren Seite der Plasmaanode austritt und dann in das Schmelzbad fällt.

Aus der DE 41 20 791 A1 ist ein Schweißbrenner bekannt, bei dem das Pulver durch mehrere Pulverführungskanäle an der unteren Seite der Plasmaanode austritt und dann in mehreren Strahlen in das Schmelzbad gelangt.

Bei diesen beiden Brennertypen hat es sich als nachteilig erwiesen, daß das Pulver wegen der hohen Temperatur im Bereich der Plasmadüse immer wieder an den Düsen festklebt und die Bohrungen nach und nach verstopfen. Schwierig gestaltet sich zudem die gleichmäßige Verteilung des Pulvers. Bei ein oder zwei Bohrungen können diese einzeln mit Pulver versorgt werden. Allerdings ist dann die Führungsrichtung des Brenners vorgegeben, da das Pulver entweder vor, hinter oder seitlich zum Plasmastrahl zugegeben werden muß.

Bei der Versorgung mehrerer Austrittsöffnungen ist die Einzelversorgung auf Grund des geringen Raumes innerhalb der Brennergeometrie oft schwierig. Deshalb werden innerhalb der Brennergeometrie manchmal ein oder zwei interne Versorgungsleitungen benutzt, die sich in einen Hohlraum erweitern, von dem aus die einzelnen Austrittsöffnungen versorgt werden. Bei Lageänderung des Brenners außerhalb der Wannenposition kommt es auf Grund der Schwerkraft, die auf die einzelnen Pulverpartikel wirkt, zur ungleichmäßigen Versorgung der einzelnen Bohrungen, was zu Asymmetrien in den Schweißraupen führt.

Eine andere Möglichkeit der Pulverzugabe wird durch eine konzentrisch zur Plasmadüse angeordnete Pulverdüse realisiert. Hierbei tritt das Pulver durch einen Ringspalt aus und erzeugt so einen schlauch- oder trichterförmigen Pulvervorhang. Auf diese Weise wird das Pulver gleichmäßig vor, hinter und neben dem Plasmastrahl dem Schmelzbad zugeführt. Auch hierbei ist es problematisch, das Pulver aus einer oder zwei Versorgungszuführungen des Brenners gleichmäßig auf den Ringquerschnitt zu verteilen. Dies wird bei den bestehenden Konstruktionen meist über eine Ringkammer realisiert, die am Ende der Versorgungsleitungen angeordnet ist und den sich anschließenden Spalt gleichmäßig mit Pulver versorgen soll. Sobald die Brennerachse aus der senkrechten Position in eine Schieflage gebracht wird, verlagert sich auf Grund der Schwerkraft in der Ringkammer der Pulveraustritt zur tiefsten Stelle hin. Das führt wiederum zu einem ungleichmäßigen Pulvereintrag in das Schweißbad, was sich in einer Asymmetrie der Schweißraupe widerspiegelt.

Speziell für das händische Schweißen in verschiedenen Positionen oder für das automatisierte Schweißen dreidimensionaler Konturen mit Schweißrobotern, bei denen die gleichmäßige richtungs- und lageunabhängige Einbringung des pulverförmigen Schweißzusatzes in das Schmelzbad qualitätsbestimmend ist, sind die bekannten Schweißbrennerkonstruktionen nur bedingt geeignet, was dazu geführt hat, daß diese Anwendungen auf wenige Einsatzmöglichkeiten begrenzt blieben. Die konstruktiven Schwierigkeiten liegen in der Führung, der Umlenkung und der gleichmäßigen Verteilung des pulvertransportierenden Gasstromes inner- und außerhalb der Brennergeometrie.

Aufgabe der Erfindung ist es daher, einen Plasma-Pulver-Schweißbrenner vorzuschlagen, bei dem das Zusatzpulver gleichmäßig in das Schweißbad transportiert wird. Dabei ist es wichtig, daß das Pulver unabhängig von der momentanen Schweißrichtung und unabhängig von der Brennerstellung gleichmäßig und ohne größere Streuverluste in das Schmelzbad gelangt.

Diese Aufgabe wird erfindungsgemäß gelöst von einem Schweißbrenner mit den kennzeichnenden Merkmalen des Hauptanspruchs, Bei der Erfindung wird die brennerinterne Führung des pulvertragenden Gasstromes also möglichst optimiert, so daß die in Flußrichtung hintersten Pulverführungskanäle ebensoviel Pulver erhalten wie die vorne liegenden. Ebenso erhalten bei gekipptem Brenner die oberen Kanäle soviel Pulver wie die unteren.

Konstruktiv kann dabei so vorgegangen werden, daß z.B. die Querschnittsflächen der Leitungen, die zum Pulverzuführsystem gehören und zur Führung des Fluids (Pulver plus Trägergasstrom) verwendet werden, weitestgehend konstant gehalten werden. Dieses Prinzip wird, soweit möglich, vom Austritt des Fluids aus der Fördervorrichtung bis zum Austritt des Pulvers aus den einzelnen konzentrisch zum Plasmalichtbogen angeordneten Pulverführungskanälen an den Pulverdüsen durchgehalten. Der Querschnitt des Pulverzuführrohrs entspricht also in etwa der Summe der Querschnitte der einzelnen Pulverführungskanäle. Dabei sollten die Querschnitte bevorzugt nicht mehr als 20% voneinander abweichen. Ist zwischen Pulverzuführrohr und den Pulverführungskanälen ein gemeinsamer Verteilkanal vorgesehen, von dem seriell die einzelnen Pulverführungskanäle abzweigen, so reduziert sich auch der Querschnitt des Verteilkanals ungefähr um den Querschnitt jedes einzelnen abzweigenden Kanals. Der Vorteil einer derartigen Fluidführung im Brenner liegt darin, daß die Strömungsgeschwindigkeiten des Fluids zu jeder Zeit und an jeder Stelle auf dem Weg von der Fördereinheit bis zum Schweißbad im wesentlichen konstant gehalten werden. Dadurch gibt es praktisch keine Verzögerung oder Beschleunigung des Volumenstromes, welche zur Anreicherung oder zur Verarmung einzelner Teilvolumenströme mit Pulverpartikeln führen würde. Das ist bei der Aufteilung des gesamten Fluidstromes, der von der Fördereinrichtung in den Brenner kommt, in Einzelströme, welche die Austrittsöffnungen der Pulverdüse versorgen, von entscheidender Bedeutung. Dabei ist zu berücksichtigen, daß die Beschleunigungskräfte, die im normalen Betrieb vom strömenden Trägergas auf die Pulverpartikel wirken, deutlich größer sind als die durch die Gravitation auf die Partikel wirkenden Kräfte.

Die erfindungsgemäße Auslegung des Pulverführsystems ist fluiddynamisch optimiert und relativ eng, so daß Toträume gar nicht auftreten, in denen sich Pulverpartikel ablagern könnten.

In einer ersten Ausführung der Erfindung wird der Pulverstrom bereits beim Eintritt in den Brennerkörper gleichmäßig in eine Anzahl von Teilströmen aufgeteilt. Strömungsgünstige Verteiler oder Verzweigungen eines stärkeren Rohres in mehrere schwächere sind sowohl aus der Biologie (Adern im Blutkreislauf, Verästelungen in Bäumen) als auch aus der Technik (Auspuffkrümmer oder Hosenrohre von Sportmotoren - dort liegt allerdings die kinematische Umkehr der gleichberechtigten Vereinigung mehrerer Einzelrohre in ein gemeinsames Endrohr vor) bekannt. Durch die Verteilung des ankommenden Stromes in mehrere gleichberechtigte Ströme wird eine gleichmäßige Verteilung der Pulvermenge erreicht. Unabhängig von der Brennerhaltung tritt in allen Brennerstellungen gleichmäßig viel Pulver aus den einzelnen Kanälen.

In einer weiteren Ausführung der Erfindung ist ein konzentrisch verlaufender Kanal vorgesehen, der den eigentlichen Plasmakanal ringförmig umgibt und von dem aus die Pulverführkanäle in Richtung Brennerspitze abzweigen. Dieser Kanal dient der Verteilung des Pulvers vom Pulverzuführrohr auf die einzelnen Pulverführungskanäle. Erfindungsgemäß verjüngt sich nun der Querschnitt des Kanals vom Pulverzuführrohr bis zum letzten bedienten Kanal hin. Dadurch wird wieder die oben beschriebene erfindungsgemäße Idee des konstant gehaltenen Querschnitts vom Anfang des Zuführweges bis zu dem Ende in den Pulverführungskanälen erreicht.

In einer weiteren Ausführung der Erfindung sind zwei oder mehr sich verjüngende Verteilkanäle vorgesehen, die die einzelnen Pulverführungskanäle mit dem Pulverzuführrohr verbinden. Auch hier sind die Verteilkanäle wieder mit abnehmendem Querschnitt versehen, so daß die Flußgeschwindigkeit in etwa konstant bleibt. Zwei oder mehrere Verteilkanäle statt einem haben den Vorteil der kürzeren Wege vom Pulvereintritt bis zu den das Pulver abgebenden Pulverführungskanälen. Bevorzugt sind zwei Verteilkanäle, wobei einer dann links um die Plasmadüse verlaufend die links liegenden und der andere rechts um die Plasmadüse verlaufend die restlichen, rechts liegenden Pulverführungskanäle bedient.

In einer weiteren Ausführung ist zusätzlich ein zweiter, näher an der Düsenspitze und horizontal verlaufender Ringkanal vorgesehen, der die einzelnen Pulverführungskanäle innerhalb ihres Verlaufes Richtung Düsenspitze miteinander verbindet. Durch diesen zweiten umlaufenden Kanal wird eine Verringerung der Pulveraustrittsgeschwindigkeit erreicht. Bevorzugt wird in diesem Fall auch die gesamte Querschnittsfläche der Pulveraustrittsöffnungen an der Unterseite der Düse entsprechend verändert, insbesondere erweitert, um eine Verringerung der Strömungsgeschwindigkeit zu erreichen. Der Grund hierfür ist, ein Auseinanderblasen des Schweißbades zu vermeiden.

### Die Erfindung bietet folgende Vorteile:

Die brennerinterne Fluidführung ermöglicht eine gezielte und streuverlustarme Einbringung pulverförmiger Zusatzwerkstoffe in das Schweißschmelzbad.

Durch die frühe Aufteilung des Gesamtfluidstromes in mehrere Einzelströme und die symmetrische Führung dieser Ströme durch den Brennerkörper wird ein gleichmäßiger Pulveraustritt aus den Pulverdüsenbohrungen gewährleistet. Dies ist für ein automatisiertes, richtungsunabhängiges Schweißen günstig.

Durch die Reduzierung der Querschnittsfläche des Verteilkanals - bevorzugt jeweils um den Querschnitt der abzweigenden Einzelkanäle - wird die Strömungsgeschwindigkeit in etwa konstant gehalten und es kommt nicht zu einer Anreicherung oder Abmagerung einzelner Teilvolumenströme mit Pulverpartikeln.

Da die Gesamtquerschnittfläche beim Durchlauf durch den Brenner möglichst konstant gehalten wird, kommt es weder zu positiven noch zu negativen Beschleunigungen der Fluidströme.

Durch die relativ enge Auslegung des Führungsquerschnitts ist die kinetische Energie, die vom Gasstrom auf die Pulverteilchen übertragen wird, groß genug, um die Pulverteilchen nahezu unbeeinflußt von Gravitationskräften durch den Brenner zu führen. Dies wiederum bewirkt, daß die aus den einzelnen Pulveröffnungen austretenden Pulvermengen untereinander immer nahezu gleich sind, unabhängig von Lage und Stellung des Brenners. Ist für bestimmte Anwendungen die Pulveraustrittsgeschwindigkeit zu groß, kann durch eine Erweiterung der Querschnittsfläche der Austrittsöffnungen durch Vergrößerung der Öffnungen oder durch Erhöhung deren Anzahl die Austrittsgeschwindigkeit verringert werden.

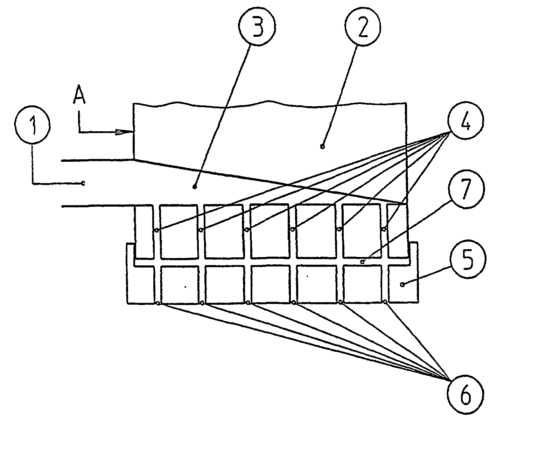

Die einzige Figur zeigt in abgewickelter Darstellung das Pulverzuführsystem in einem erfindungsgemäßen Brenner.

In der Figur ist das Pulverzuführrohr 1 als Fluidzuleitung in den Brennerkörper 2 dargestellt. Mit Bezugszeichen 3 ist der Verteilkanal bezeichnet, der hier wegen der abgewickelten Darstellung als gerade verlaufend gezeichnet ist, jedoch in Wirklichkeit als Ring die eigentliche Plasmadüse umgibt und horizontal verläuft. Zu erkennen ist weiterhin, daß der Verteilerkanal 3 an seiner Eingangsseite bei der Fluidzuleitung einen relativ großen Durchmesser hat, während sein Querschnitt im weiteren Verlauf immer weiter abnimmt. Diesem Verteilkanal 3 schließen sich mehrere Pulverführungskanäle 4 als Abzweigungen an, die alle zu einer Pulverdüse 5 führen. Diese Pulverdüse 5 hat so viele Pulveraustrittsöffnungen 6, wie Kanäle 4 vorgesehen sind. In dieser Ausführung ist zusätzlich noch ein Ringkanal 7 vorgesehen, der alle Einzelkanäle 4 miteinander verbindet und zur Reduktion der Fluidgeschwindigkeit vorgesehen ist. Ein solcher Ringkanal 7 kann insbesondere auch dann verwendet werden, wenn die Zahl der einzelnen Pulverführungskanäle 4 unterschiedlicher Zahl der Pulveraustrittsöffnungen 6 ist. In diesem Fall vergleichmäßigt der Ringkanal 7 die Strömung des Pulvers.

Im Betrieb des Brenners wird Pulver von seinem Treib- oder Trägergas durch das Pulverzuführrohr 1 an die Stelle A des Brennerkörpers 2 geleitet. Das Pulver gelangt in den horizontal verlaufenden ringförmigen Verteilkanal 3, der auf der Mantelfläche des Grundkörpers 2 liegt. Der Kanal 3 hat am Anfang ungefähr den gleichen Querschnitt wie die zuführende Rohrleitung 1. In seinem Verlauf reduziert sich die Querschnittsfläche des Kanals 3 kontinuierlich; bei dem hier gewählten Ausführungsbeispiel bis auf null. Gleichzeitig zweigen in gleichmäßigen Abständen eine Anzahl von Pulverführungskanälen 4 gleicher Querschnittsfläche, vorliegend sechs Stück, im rechten Winkel parallel zur Brennerachse nach unten ab. Dabei wurde bei dem Ausführungsbeispiel darauf geachtet, daß die Gesamtquerschnittsfläche der über die Länge des Kanals 3 gleichmäßig abzweigenden Pulverführungskanäle 4 der Ursprungsquerschnittsfläche des Kanals 3 an seinem Anfang entspricht. Durch diese Maßnahme ist gewährleistet, daß sich der in den Brenner 2 eintretende Gesamtfluidstrom in eine Anzahl (hier sechs) gleicher Fluidströme aufteilt, die auf Grund der konstanten Strömungsgeschwindigkeit alle eine annähernd gleiche Anzahl von Pulverpartikeln mit sich führen. Am unteren Ende dieser Kanäle 4 befindet sich die Pulverdüse 5, die über eine vorgegebene Anzahl von Bohrungen 6 die Fluidströme direkt in das Schmelzbad leitet.

Die Anzahl der Pulveraustrittsöffnungen 6 kann mit der Anzahl der zuführenden senkrechten Pulverführungskanäle 4 übereinstimmen. Sie kann aber auch von der Anzahl abweichend sein, insbesondere dann, wenn durch einen vorgeschalteten ringförmigen Kanal 7 eine Verringerung der Pulveraustrittsgeschwindigkeit erreicht wird. In diesem Fall ist auch die gesamte Querschnittsfläche der Pulveraustrittsöffnungen 6 an der Unterseite der Pulverdüse 5 entsprechend zu verändern, so daß eine Verringerung der Strömungsgeschwindigkeit erreicht wird.

### Bezugszeichenliste

- 1: Pulverzuführrohr
- 2: Brennerkörper
- 3: Verteilkanal
- 4: Pulverführungskanal
- 5: Pulverdüse
- 6: Pulveraustrittsöffnung
- 7: Ringkanal

## Patentansprüche

1. Plasma-Pulver-Schweißbrenner mit mindestens einer Plasmadüse, einem Pulverzuführrohr (1) und mehreren die Plasmadüse umgebenden Pulverführungskanälen (4), **gekennzeichnet durch** einen konzentrisch verlaufenden Verteilkanal (3), von dem seriell die Pulverführungskanäle (4) abzweigen, wobei dessen Querschnitt vom Pulverzuführrohr (1) bis zum letzten Pulverführungskanal (4) abnimmt, wodurch der Querschnitt des Pulverführungssystems so gewählt ist, daß unabhängig von der Brennerhaltung eine möglichst gleichmäßige Pulvereinbringung erreicht wird.

2. Plasma-Pulver-Schweißbrenner nach Anspruch 1, **dadurch gekennzeichnet, daß** der Pulvergasstrom bereits bei Eintritt in den Brennerkörper (2) gleichmäßig auf eine Anzahl von Teilströmen aufgeteilt wird.

3. Plasma-Pulver-Schweißbrenner nach Anspruch 1 oder Anspruch 2, **dadurch gekennzeichnet, daß** zwei oder mehr sich verjüngende Verteilkanäle vorgesehen sind, die die einzelnen Pulverführungskanäle (4) mit dem Pulverzuführrohr (1) verbinden.

4. plasma-Pulver-Schweißbrenner nach einem der vorhergehenden Ansprüche, **gekennzeichnet durch** einen zweiten Ringkanal (7), der die Pulverführungskanäle (4) miteinander verbindet.

## Claims

1. Plasma powder welding torch comprising at least one plasma nozzle, a powder feed tube (1) and several powder guide channels (4) surrounding the plasma nozzle, **characterised by** a concentrically extending distributed channel (3) from which the powder guide channels (4) branch off serially, wherein the cross-section thereof reduces from the powder feed tube (1) to the last powder guide channel (1), whereby the cross-section of the powder guide system is so selected that the most uniform possible introduction of powder is achieved independently of the torch position.

2. Plasma powder welding torch according to claim 1, **characterised in that** the powder gas flow is uniformly divided up into a number of part flows already on entry into the torch body (2).

3. Plasma powder welding torch according to claim 1 or claim 2, **characterised in that** two or more narrowing distributed channels which connect the individual powder guide channels (4) with the powder feed tube (1) are provided.

4. Plasma powder welding torch according to one of the preceding claims, **characterised by** a second annular channel (7) which connects the powder guide channels (4) together.

## Revendications

1. Torche à plasma avec injection de poudre comportant au moins une tuyère à plasma, un tube d'admission de la poudre (1) et plusieurs canaux de guidage de la poudre (4) qui entourent la tuyère à plasma, **caractérisée par** un canal de répartition (3) concentrique, à partir duquel dérive une série de canaux de guidage de la poudre (4), la section dudit canal de répartition diminuant à partir du tube d'admission de la poudre (1) jusqu'au dernier canal de guidage de la poudre (4), moyennant quoi la section du système de guidage de la poudre est choisie de telle sorte que, indépendamment de la position de la torche, l'injection de poudre est aussi homogène que possible.

2. Torche à plasma avec injection de poudre selon la revendication 1, **caractérisée en ce que** le flux de gaz et poudre est réparti régulièrement en un nombre de flux partiels, déjà à l'entrée du corps de la torche (2).

3. Torche à plasma avec injection de poudre selon la revendication 1 ou 2, **caractérisée en ce qu'**il est prévu deux ou davantage de canaux de répartition se rétrécissant, par lesquels chacun des canaux de guidage de la poudre (4) communique avec le tube d'admission de la poudre (1).

4. Torche à plasma avec injection de poudre selon l'une quelconque des revendications précédentes, **caractérisée par** un deuxième canal annulaire (7), par lequel les canaux de guidage de la poudre (4) communiquent entre eux.
